(19) **Europäisches Patentamt**

**European Patent Office**

**Office européen des brevets**

(11) Veröffentlichungsnummer : **0 474 620 A1**

(12) # EUROPÄISCHE PATENTANMELDUNG

(21) Anmeldenummer : **91890167.9**

(22) Anmeldetag : **30.07.91**

(51) Int. Cl.⁵ : **G01B 11/08**

(30) Priorität : **10.08.90 AT 1673/90**

(43) Veröffentlichungstag der Anmeldung :
**11.03.92 Patentblatt 92/11**

(84) Benannte Vertragsstaaten :
**AT BE CH DE DK ES FR GB GR IT LI LU NL SE**

(71) Anmelder : **BÖHLER Gesellschaft m.b.H.**
**Mariazellerstrasse 25**
**A-8605 Kapfenberg (AT)**

(72) Erfinder : **Emminger, Herbert, Ing.**
**Johann Böhmstrasse 45**
**A-8605 Kapfenberg (AT)**

(54) Verfahren und Vorrichtung zur Vermessung von wärmestrahlenden Körpern.

㊷   Die Erfindung bezieht sich auf ein Verfahren und eine Vorrichtung zur opto-elektronischen Vermessung von wärmestrahlenden Körpern (1), insbesondere von Schmiedestücken oder Walzmaterial, mittels mindestens einer Diodenzeilen oder eine linienförmig ausgebildete, lichtempfindliche Halbleitermatrix aufweisenden Einrichtung bzw. Kamera (3, 3'). Um die Genauigkeit der Messung zu verbessern, ist erfindungsgemäß vorgesehen, daß die von der (den) opto-elektronischen Einrichtung-(en) bzw. Kamera(s) (3, 3') gebildeten, eine Meßstrecke darstellenden Signale jeweils gegebenenfalls vorerst zur Einstellung der Einrichtung, insbesondere zur Brennweiteneinstellung der Optik (31, 31'), verwendet, bearbeitet und in geänderter und/oder korrigierter Form einer Recheneinheit (5) zugeführt und von dieser verarbeitet und nach der Verarbeitung für eine Steuerung der Verformungseinrichtung eingesetzt und/oder zur Anzeige der Meßergebnisse verwendet werden.

EP 0 474 620 A1

Fig. 1a

Fig. 1

Die Erfindung bezieht sich auf ein Verfahren und eine Vorrichtung zur Vermessung von wärmestrahlenden Körpern gemäß den Oberbegriffen der unabhängigen Patentansprüche.

An Körpern, welche eine Temperatur von über 450°C aufweisen und somit Wärmestrahlung, deren Intensität bei verschiedenen Wellenlängen von der jeweiligen Temperatur abhängt, emittieren, müssen oft genaue Vermessungen durchgeführt werden. Derartige Vermessungen, bei welchen Durchmesser oder Kantenlängen eines Körperquerschnittes oder achsiale Abschnittslängen zu ermitteln sind, sind insbesondere bei der Herstellung von Schmiedestücken oder Stabmaterial erforderlich, um beispielsweise eine gewünschte Verformung einzustellen und/oder zu kontrollieren und gegebenenfalls eine Steuerung der Querschnittsabnahme bzw. der Warmformgebung vorzunehmen. Genaue Durchmesser- oder Längenvermessungen werden an glühenden Körpern zumeist mit Lehren, zum Beispiel Schiebelehren und dgl., insbesondere manuell, durchgeführt. Messungen mit Lehren sind jedoch umständlich, gegebenenfalls unsicher und können durch die Temperaturstrahlung vom Meßobjekt behindert sein, weil die Maße direkt am Körper abgegriffen werden.

Optische Meßmethoden und Meßvorrichtungen sind in vielen Ausführungsformen bekannt. Im allgemeinen erfolgt dabei eine Beleuchtung des zu vermessenden Objektes; eine Kontur des Körpers wird mittels einer Sammeloptik abgebildet und zur Feststellung der Abmessung ausgewertet. Derartige Vorrichtungen arbeiten zumeist mit einem scharf gebündelten Lichtstrahl als Beleuchtung, z.B. einem Laserstrahl, mit welchem auf dem zu prüfenden Objekt ein Lichtstrich erstellt wird. Von einer schräg zum Lichtstrahl angeordneten Kamera oder dgl. wird das Bild des Lichtstriches aufgenommen und unter Zugrundelegung der geometrischen Bedingungen ein Meßergebnis erstellt ( US-PS 3 773 422).

Eine Verwendung von optischen Verfahren zur geometrischen Vermessung von Körpern, welche eine im Vergleich mit der Umgebung erhöhte Temperatur aufweisen, hat jedoch, insbesondere bei großen Abmessungsunterschieden, den Nachteil, daß eine gewünschte Meßgenauigkeit oft nicht erreicht wird und/oder große vorrichtungsund verfahrenstechnische Aufwendungen erforderlich sind. Das optische Bild von wärmestrahlenden Körpern mit einer Temperatur von insbesondere größer als 450°C ist unruhig bzw. mit unstetigen Erscheinungen überlagert; es tritt ein sogenanntes Wärmeflimmern auf. Weiters können Verzerrungen durch die Optik entstehen, welche vorwiegend bei großen Unterschieden des Quotienten Meßfeld und Objekt zu fehlerhaften Meßwerten führen. Eine Ungenauigkeit bei der Meßwerterfassung kann auch durch einen Unterschied der Frequenz des zur Messung verwendeten Lichtes begründet sein, weil der Berechnungswinkel von der Frequenz abhängig ist.

Der Erfindung liegt die Aufgabe zugrunde, ein Verfahren und eine Vorrichtung zur Vermessung von wärmestrahlenden Körpern mit einer Temperatur von mindestens 450°C zu schaffen, mit welchen es ermöglicht wird, obige Nachteile zu vermeiden und auf einfache Weise Meßwerte mit großer Genauigkeit bereitzustellen, welche für eine Anzeige, Ausgabe oder gegebenenfalls für eine Steuerung einer Verformungseinrichtung verwendbar sind.

Diese Aufgabe wird bei einem gattungsgemäßen Verfahren bzw. bei einer gattungsgemäßen Einrichtung durch die kennzeichnenden Merkmale des Anspruches 1 bzw. des Anspruches 8 gelöst. Vorteilhafte Weiterbildungen der Erfindung sind in den Unteransprüchen gekennzeichnet.

Die mit der Erfindung erreichten Vorteile sind im wesentlichen darin zu sehen, daß in einer einfachen Einrichtung eine Abbildung des wärmestrahlenden Körpers auf einer lichtempfindlichen Halbleiter- Matrix erfolgt, welche entsprechende Signale bildet, die einem Meßwertkorrekturrechner zugeleitet werden. In diesem , vorzugsweise programmierbaren, Meßwertkorrekturrechner erfolgt eine Auswahl jener Signale, welche für eine Meßwertermittlung zu verwenden sind. Dies kann durch eine untere Begrenzung der Signalintensität und/oder Intensitätsdauer durch eine nur in Grenzen zugelassene Streubreite benachbarter Signale oder Signalgruppen oder dgl. erfolgen. Weiters werden die für die Meßwertermittlung verwendeten Signale derart korrigiert, daß Fehler, welche beispielsweise durch eine optische Bildverzerrung oder dgl. entstehen, kompensiert werden. Der Meßwertkorrekturrechner, welcher gegebenenfalls in der opto-elektronischen Abbildungseinrichtung bzw. Kamera oder in einer Recheneinheit integriert sein kann, gibt somit bearbeitete Signale aus, welche im wesentlichen das Istmaß des Körpers kennzeichnen. Diese Istmaßsignale werden einer Recheneinheit zugeführt und sind für eine Steuerung einer Verformungseinrichtung und/oder für eine direkte Anzeige der Istmessung, gegebenenfalls nach einer Speicherung, für einen Ausdruck verwendbar. Besonders vorteilhaft ist es, wenn, insbesondere vor der Meßwertbildung, der Meßwertkorrekturrechner die Größe der Abbildung auf der lichtempfindlichen Halbleiter-Matrix unter Zugrundelegung der ausgewählten Signale ermittelt und durch entsprechende Mittel die Brennweite der Optik derart verändert wird, daß die Abbildung des Körpers mindestens 40 % der Matrix bedeckt, worauf diese optische Einstellung für die Vermessung eines Körpers unverändert bleiben kann.

Im folgenden wird die Erfindung anhand von Zeichnungen ausführlich erläutert.

Es zeigen in schematischer Darstellung

Fig. 1 eine Einrichtung zur Vermessung von Körpern

Fig. 1a eine Meßlinie mit Abbildung eines Körpers

Fig. 2 ein Diagramm mit von einer lichtempfindlichen HalbleiterMatrix abgegebenen Signalen

Fig. 3 ein Beispiel für eine Vermessung eines Schmiedestückes

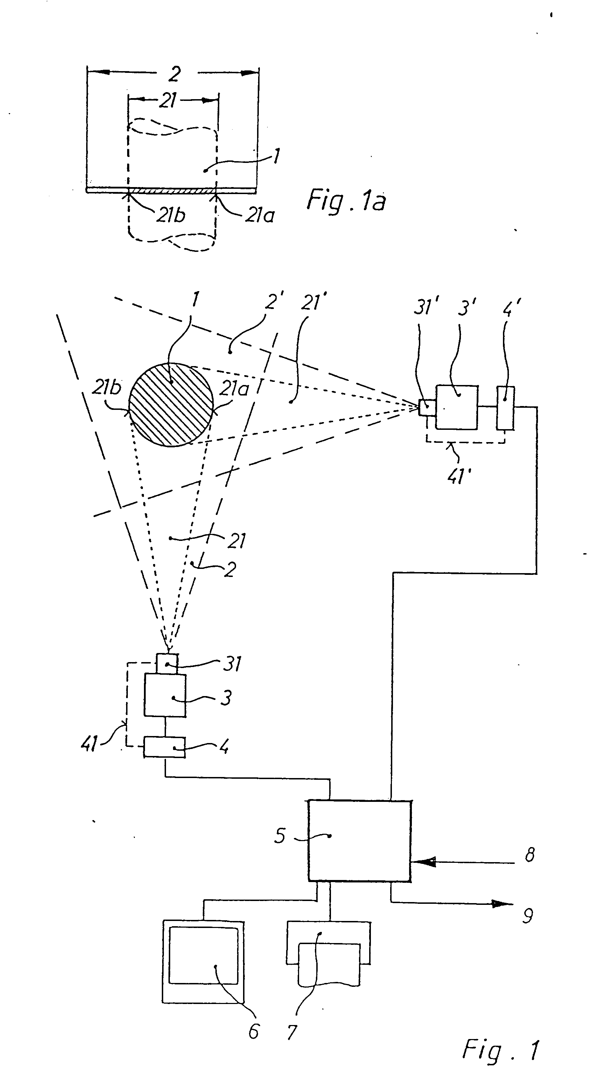

Fig. 1 zeigt eine Vermessungseinrichtung mit einem wärmestrahlenden Rundkörper 1. Eine oder mehrere opto-elektronische Einrichtungen bzw. Kameras 3, 3′ mit Objektiven 31, 31′, deren Brennweiten gegebenenfalls veränderbar sind, weisen eine vorzugsweise linienförmige lichtempfindliche Halbleiter-Matrix auf und sind derart angeordnet, daß die Längserstreckung der Matrix jeweils senkrecht zur Längsachse des Rundkörpers 1 ausgebildet ist.

Meßwertkorrekturrechner 4, 4′ sind mittels Signalübertragungsmittel mit den Linienkameras 3, 3′ bzw. mit deren lichtempfindlicher Halbleiter- Matrix verbunden. Eine elektrische Verbindung 41, 41′ besteht gegebenenfalls zwischen Meßwertkorrekturrechner und Mittel ( nicht dargestellt) zur Brennweitenveränderung von Objektiven 31,31′. Weiters sind Signalübermittlungsleitungen zwischen Meßwertkorrekturrechner 4,4′ und einer Recheneinheit 5 angeordnet, welche ihrerseits ein oder mehrere Anzeigegerät(e) 6 und/oder Ausgabegerät(e) 7 versorgt. Zur Steuerung einer Verformungseinrichtung sowie zu einem Soll- Ist-Vergleich ist es möglich, entsprechende Sollvorgaben 8 der Recheneinheit 5 zuzuleiten, welche nach Verarbeitung der Signale bzw. Daten zum Beispiel Steuerbefehle 9 an die Verformungseinrichtung oder Meßabweichungen an ein Anzeigegerät 6 oder Ausgabegerät 7 ausgibt.

Die beschriebene Einrichtung arbeitet auf folgende Weise:, In ein Meßfeld bzw. in einen Meßlinienfächer 2, 2′ wird ein wärmestrahlender Körper 1 eingebracht. Wie auch Fig. 1a zeigt, erfolgt eine Abbildung des Körpers 1 und auf der linienförmigen lichtempfindlichen Halberleiter-Matrix mit einer dem Meßlinienfächer 2 entsprechende Längserstreckung wird eine Objektmeßlinie 21, 21′ mit deren Begrenzungen 21a und 21b gebildet.

Eine lichtempfindliche Halberleiter-Matrixlinie besteht beispielsweise aus 256, 512 oder 1024 Bildpunkten, wobei jeder Bildpunkt zwei hoch acht Helligkeitswerte unterscheiden kann und entsprechende Signale weitergibt. Alle Signale der HalbleiterMatrix werden an den Meßwertkorrekturrechner 4 weitergegeben.

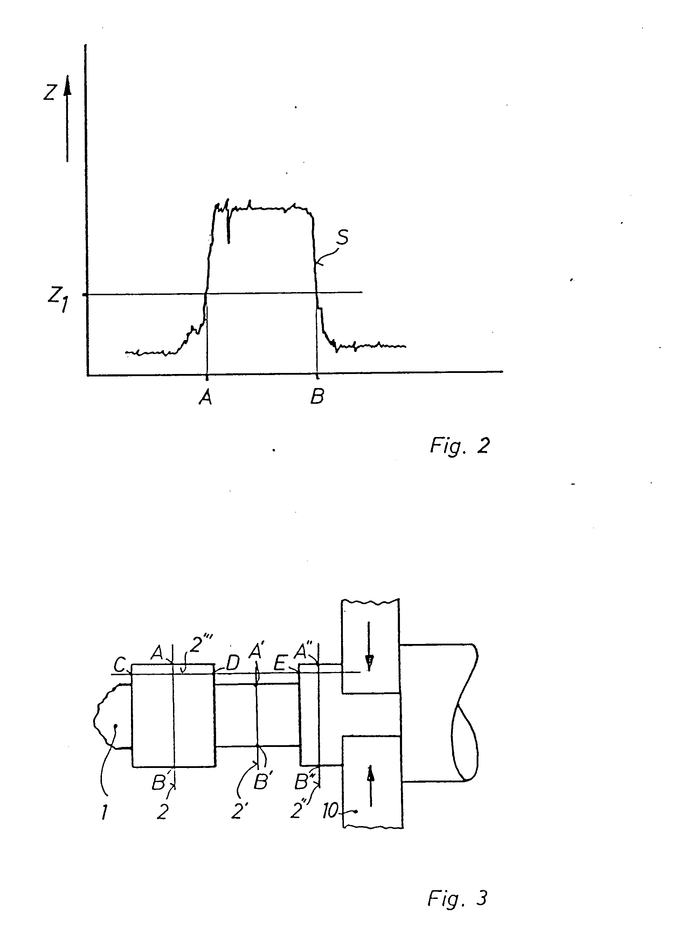

Fig. 2 zeigt ein Diagramm mit der Intensität Z der von der lichtempfindlichen Halbleiter-Matrix abgegebenen Signale S. Ein Anstieg bzw. Abfall der Intensität der Signallinie S wird durch die Begrenzungen 21a bzw. 21b der Objekmeßlinie 21 bewirkt. Der Meßwertkorrekturrechner 4, 4′ bestimmt nun beispielsweise mittels Signalintensitätsgrenze Z1 oder dgl., welche Signale für eine Meßwertermittlung, zum Beispiel $\overline{AB}$, für eine Durchmesserfeststellung einzusetzen sind, wobei störende, insbesondere temperaturbedingte, Einflüsse wie ein sogenanntes Wärmeflimmern und ähnliches unwirksam gemacht werden. Weiters können Fehler wie optische Bildverzerrungen und dgl.auf einfache Weise durch den Meßwertkorrekturrechner 4, 4′ berichtigt werden. Eine Weitergabe von bearbeiteten Signalen, welche ein genaues Maß des Körpers vermitteln, erfolgt an eine Recheneinheit 5, von welcher nach entsprechender Signal- bzw. Datenaufbereitung- und speicherung Anzeigegeräte 6 und/oder Drucker 7 gespeist werden.

Sind zwei oder mehrere Meßeinrichtungen, welche eine Quererstreckung 21, 21′ ermitteln, winkelverdreht um ein wärmestrahlendes Objekt 1 angeordnet, so ist auf Grund von berichtigten Meßlängen und von Winkelmaßen mit einer Recheneinheit 5 auf einfache Weise die Querschnittsform und/oder die Querschnittsfläche des Objektes 1 bestimmbar.

Eine Recheneinheit 5 der beschriebenen Vermessungseinrichtung kann weiters für eine Steuerung von Verformungseinrichtungen verwendet werden. Dabei erfolgt beispielsweise eine Feststellung der Ist-maße, gegebenenfalls des verformten Körpers nach einem ersten Stich, welche Istamße mit einer Eingabe 8 von gewünschten Maßen verglichen werden, wonach entsprechend gebildete Steuerbefehle zum Beispiel eine Anstellung von Verformungswerkzeugen, gegebenenfalls für eine Abfolge von mehreren Umformschritten, und dgl. zur Ausgabe 9 gebracht und der Steuerung, gegebenenfalls in zeitlicher Abfolge, einer Verformungseinrichtung zugeführt werden. Es ist auch möglich, den Meßwertkorrekturrechner 4 in die optoelektronische Einrichtung 3 zur Abbildung des wärmestrahlenden Körpers mit Signalbereitstellung oder in die Recheneinheit 5 zu integrieren oder die Recheneinheit 5 entsprechend zu gestalten und zu programmieren.

Um die Genauigkeit der Meßwertermittlung bei unterschiedlichen Abmessungen von strahlenden Körpern weiter zu erhöhen, kann zusätzlich am Meßwertkorrekturrechner 4,4′ eine vorerst ermittelte Länge der Objektmeßlinie 21 mit dem Meßfeld 2, 2′ bzw. mit der nutzbaren Länge der linienförmigen lichtempfindlichen Halbleiter-Matrix verglichen und über eine Steuerleitung 41, 41′ die Brennweite des Objektives 31, 31′ derart verändert werden, daß eine Abbildung des Körpers 1 bzw. die Objektmeßlinie 21, 21′ einen großen Teil der Matrixlänge bzw. eine hohe Anzahl von Bildpunkten der Matrix überdeckt.

Fig. 3 zeigt Anwendungen des erfindungsgemäßen Verfahrens für eine Vermessung eines Schmiedestückes 1. Dabei werden Durchmesser AB, $\overline{A'B'}$, $\overline{A''B''}$ eines von Werkzeugen 10 verformten Körpers 1 ermittelt, wobei das linienförmige Meßfeld 2,2′,2″ bzw. die Matrixlinie senkrecht zur Achse des Schmiedestückes 1 eingestellt ist. Für eine Ermittlung einer Ballen- oder Zapfenbreite CD, DE wird das Meßfeld 2‴ parallel zur Körperachse ausgerichtet.

**Patentansprüche**

1. Verfahren zur Vermessung von wärmestrahlenden Körpern mit einer Temperatur von mindestens 450°C, vorzugsweise zur Ermittlung eines Durchmessers oder einer Kantenlänge und/oder eines Querschnittes und/oder einer achsialen Abschnittslänge, insbesondere von Schmiedestücken oder Walzmaterial zur Kontrolle, Dokumentation sowie gegebenenfalls zur Steuerung der Verformung, dadurch gekennzeichnet, daß in einer opto-elektronischen Einrichtung mittels eines Objektives oder dergleichen zumindest ein Teil des zu vermessenden Körpers, vorzugsweise durch dessen Eigenstrahlung auf Grund erhöhter Temperatur, auf einer lichtempfindlichen Halbleiter-Matrix, z.B. einem c-c-d- Modul ( charge-coupled-device-Modul), welche vorzugsweise eine Linienform im wesentlichen senkrecht zur Körperachse oder in Körperachsrrichtung aufweist, abgebildet wird, von welcher lichtempfindlichen Matrix der Abbildung gemäß eine Erstreckung des Körpers vermittelnde Signale gebildet und einem Meßwertkorrekturrechner zugeleitet, in diesem bearbeitet und von diesem in entsprechend geänderter und/oder korrigierter Form ausgegeben werden, welche ausgegebenen Signale gegebenenfalls zu einer Veränderung der Brennweite des Objektives durch geeignete Mittel verwendet und/oder in eine Recheneinheit eingebracht, in dieser verarbeitet und gegebenenfalls für eine Steuerung einer Verformungseinrichtung ausgetragen bzw. eingesetzt und/oder gespeichert und/oder zur Ausgabe gebracht werden, wobei durch geeignete Geräte eine Anzeige und/oder ein Ausdruck durchgeführt wird (werden).

2. Verfahren nach Anspruch 1, dadurch gekennzeichnet, daß mindestens eine opto-elektronische Meßeinrichtung derart angeordnet ist, daß eine Abbildung der Begrenzungen eines Körpers senkrecht auf eine Linie einer lichtempfindlichen Halbleiter-Matrix erfolgt.

3. Verfahren nach Anspruch 1 oder 2, dadurch gekennzeichnet, daß von einem Meßwertkorrekturrechner die für eine Meßwertbildung zu verwendenden, von einer lichtempfindlichen Halbleiter-Matrix abgegebenen Signale, z.B. auf Grund von Intensitätsdauer oder durch Intensitätsvergleich und dgl., ausgewählt werden.

4. Verfahren nach einem der Ansprüche 1 bis 3, dadurch gekennzeichnet, daß eine durch einen von der Frequenz der Strahlung des Körpers abhängigen Berechnungswinkel bewirkte und/oder durch eine Linsenverzerrung entstehende Abweichung(en) von einer maßgetreuen Wiedergabe des Körpers auf einer lichtempfindlichen Halbleiter-Matrix durch einen Meßwertkorrekturrechner berichtigt wird (werden).

5. Verfahren nach einem der Ansprüche 1 bis 4, dadurch gekennzeichnet, daß durch einen Meßwertkorrekturrechner die Brennweite einer Optik einer opto-elektronischen Einrichtung derart verändert wird, daß die Abbildung zumindest eines Teiles eines Körpers mindestens 40%, vorzugsweise mindestens 6o%, insbesondere etwa 80%, der lichtempfindlichen Halbleiter-Matrix oder Linie überdeckt.

6. Verfahren nach einem der Ansprüche 1 bis 5, dadurch gekennzeichnet, daß mindestens zwei Meßeinrichtungen mit Meßwertkorrekturrechner derart angeordnet werden, daß deren Meßachsen einen Winkel zueinander aufweisen und im wesentlichen sich die jeweiligen Meßachsen in einem Punkt mit der Körperlängsachse schneiden und deren Signale einer Recheneinheit zugeführt und von dieser verarbeitet werden, wobei eine Berechnung der Querschnittsform und/oder des Querschnittsfläche des Körpers durchgeführt wird und die Rechenergebnisse gespeichert und/oder angezeigt und/oder ausgegeben und-/oder zur Steuerung einer Verformungseinrichtung verwendet werden.

7. Verfahren nach einem der Ansprüche 1 bis 6, dadurch gekennzeichnet, daß die berichtigten Meßwerte bzw. Meßergebnisse, z.B. Durchmesser des Körpers, in Absolutgrößen bzw. Zahlenwerten angezeigt bzw. ausgegeben werden.

8. Einrichtung zum Vermessen von wärmestrahlenden Körpern (1) mit einer Temperatur von mindestens 450 C, vorzugsweise zur Ermittlung eines Durchmessers oder einer Kantenlänge und/oder eines Querschnittes und oder einer achsialen Abschnittslänge, insbesondere von Schmiedestücken oder Walzmaterial zur Kontrolle, Dokumentation sowie gegebenenfalls zur Steuerung einer Verformung , dadurch gekennzeichnet, daß eine auf den zu messenden Körper (1) ausgerichtete opto-elektronische Einrichtung (3,3') mit einem gegebenenfalls in seiner Brennweite veränderbaren Objektiv (31,31') und einer lichtempfindlichen Halbleiter-Matrix, vorzugsweise in Linienform, zur Datenübermittlung mit einem Meßwertkorrekturrechner (4,4') verbunden ist, welcher mit einer Recheneinheit (5) zur Signalweitergabe in Verbindung steht und gegebenenfalls an entsprechende Mittel zur Verstellung der Brennweite des Objektives (31) angeschlossen ist und die Recheneinheit (5), vorzugsweise mit Speichereinrichtung, mindestens einen Signalausgang aufweist, mit welchem(n) ein oder mehrere Anzeigegerät(e) (6) und/oder Ausgabegerät(e) (7) mit aktuellen und/oder gespeicherten Signalen bzw. Daten versorgbar ist(sind) und gegebenenfalls einen oder mehrere Signalein-(8) und -ausgang(gänge)(9) vorgesehen ist (sind), durch welche z.B. mittels Soll-Ist- Vergleiches eine Verformungseinrichtung steuerbar ist.

9. Einrichtung nach Anspruch 8, dadurch gekennzeichnet, daß die lichtempfindliche Halbleiter-Matrix in Linienform ausgebildet ist, welche Linie in der Meßposition einen Normalabstand auf die Körperachse aufweist und zu dieser senkrecht oder parallel steht.

10. Einrichtung nach Anspruch 8 oder 9, dadurch gekennzeichnet, daß die Brennweite der Optik verstellbar ist und geeignete Mittel zur Verstellung der Brennweite mit dem Meßwertkorrekturrechner (4,4′) verbunden sind.

11. Einrichtung nach einem der Ansprüche 8 bis 10, dadurch gekennzeichnet, daß mindestens zwei Meßeinrichtungen (3,3′), bestehend aus im wesentlichen jeweils Objektiv (31,31′), lichtempfindlicher Halbleiter-Matrix und gegebenenfalls örtlich getrenntem Meßwertkorrekturrechner (4,4′, derart angeordnet sind, daß die Meßachsen einen Winkel zueinander aufweisen und im wesentlichen sich in einem Punkt mit der Körperlängsachse schneiden und die Meßwertkorrekturrechner (4,4′) mit einer Recheneinheit (5) durch Signal-bzw. Datentransportmittel in Verbindung stehen.

12. Einrichtung nach einem der Ansprüche 8 bis 11, dadurch gekennzeichnet, daß die Meßwerte in Absolutgrößen bzw. Zahlen digital oder analog ausgebbar sind.

13. Verwendung eines Verfahrens gemäß den Ansprüchen 1 bis 7 und einer Einrichtung gemäß den Ansprüchen 8 bis 12 zur Vermessung von Schmiedestücken oder Walzmaterial mit einer Temperatur von mindestens 450°C und gegebenenfalls zur Steuerung einer Verformungseinrichtung.

Fig . 1a

Fig . 1

Fig. 2

Fig. 3

EP 0 474 620 A1

**Europäisches Patentamt**

## EUROPÄISCHER RECHERCHENBERICHT

Nummer der Anmeldung

### EINSCHLÄGIGE DOKUMENTE

EP 91890167.9

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | DE - B - 2 920 531 (EXATEST) * Gesamt * -- | 1,2,3, 6,8,9, 11 | G 01 B 11/08 |
| A | FR - A - 2 588 654 (DUJARDIN) * Seite 4, Zeile 29-56; Zeile 14; Fig. 1,2 * -- | 1,2,6, 8,9, 11 | |
| A | EP - A - 0 250 089 (TOLE) * Gesamt * ---- | 1,2,3, 6,8,9, 11 | |

**RECHERCHIERTE SACHGEBIETE (Int Cl.⁵)**

G 01 B 11/00
G 01 J 5/00

Der vorliegende Recherchenbericht wurde für alle Patentansprüche erstellt.

| Recherchenort | Abschlußdatum der Recherche | Prüfer |
|---|---|---|
| WIEN | 26-11-1991 | TOMASELLI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82

9